(19)

**Europäisches Patentamt**
**European Patent Office**
**Office européen des brevets**

(11) **EP 1 965 598 A1**

(12) **EUROPEAN PATENT APPLICATION**

(43) Date of publication:
**03.09.2008 Bulletin 2008/36**

(51) Int Cl.:
**H04Q 7/38** (2006.01)    **H04L 12/56** (2006.01)

(21) Application number: **08000673.7**

(22) Date of filing: **15.01.2008**

<table>
<tr><td>

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.01.2007 GB 0700750**

(71) Applicant: **Samsung Electronics Co., Ltd.**
**Suwon-si, Gyeonggi-Do (KR)**

(72) Inventors:
• **Kim, Soeng-Hun**
**Suwon-si**
**Gyeonggi-do (KR)**

</td><td>

• **Van Lieshout, Gert Jan**
**Suwon-si**
**Gyeonggi-do (KR)**
• **Van der Velde, Himke**
**Suwon-si**
**Gyeonggi-do (KR)**

(74) Representative: **Lang, Johannes**
**Bardehle Pagenberg Dost Altenburg Geissler,**
**Postfach 86 06 20**
**81633 München (DE)**

</td></tr>
</table>

(54) **Method of broadcasting in a telecommunications network in a segmentation re-assembly mode**

(57)    Provided is a method of broadcasting in a telecommunications network in a segmentation/re-assembly mode, wherein segmentation and/or re-assembly is performed based on ordering information or sequence number information generated from a transmission schedule.

Fig. 3

**Description**

BACKGROUND OF THE INVENTION

1. Field of the Invention

This invention relates to Radio Link Control (RLC) operation suitable and optimized for broadcast mode. The methods and systems described in the following may for example be used in the environment of Evolved Universal Terrestrial Radio Access (E-UTRA), RLC operation including segmentation and combining optimized for Single Frequency Network (SFN) mode, or any other data link that must support segmentation/re-assembly and/or ciphering/deciphering.

2. Description of the Related Art

The 3$^{rd}$ Generation Partnership Project (3GPP), developing the long-term evolution of the 3GPP radio technology. More details about the Evolved UTRA (E-UTRA) and the Evolved UTRAN (E-UTRAN) may for example be found in the 3GPP specification 25.9.13, "Technical Specification Group Radio Access Network; Requirements for E-UTRA and E-UTRAN".

SFN operation

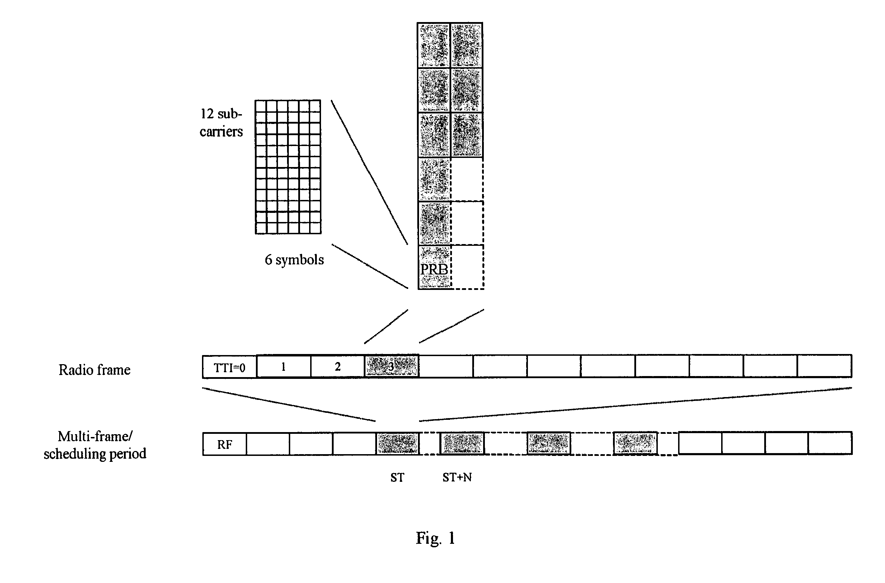

In the 3GPP Long Term Evolution network, the "Single Frequency Network (SFN) mode of operation may be used for broadcast transmission. In the SFN mode of operation, the participating enhanced Node-Bs (eNBs) simultaneously transmit identical Multimedia Broadcast Multicast Service (MBMS) contents via the same radio resources, or more precisely via the same Physical time/frequency Resource Blocks (PRBs). When the SFN mode of operation is used, User Elements (UEs) combine transmissions from different cells without being aware of the different sources (i.e. to the UE it seems as if there is a transmission from one cell).
SFN mode of operation requires that the participating eNBs are tightly synchronized.
In the following, the term 'MBMS pipe' is used to refer to the physical radio resources for which SFN operation is configured. An example of such an MBMS pipe is shown in Fig. 1 wherein a 1.25MHz bandwith and 9 PRBs per Radio Frame. The shaded PRBs within a Transmission Time Interval (TTI) 3 of every N'th frame, starting from (and including) the radio frame with number Start Time (ST), include MBMS user data using SFN mode of operation.
Fig. 1 shows an E-UTRA specific example i.e. the allocated physical resource blocks are each comprised of 12 sub-carriers by 6 symbols.
It is possible that multiple MBMS services share the same MBMS pipe. For all services sharing an 'MBMS pipe' the same eNBs should participate in the transmission.
The 3GPP Technical report TR R3.018 includes further definitions of Single Frequency Network (SFN) Area and Multi-cell MBMS Synchronization Area. In terms of these definitions, only services for which the same SFN area applies can share an 'MBMS pipe'.

MBMS architecture

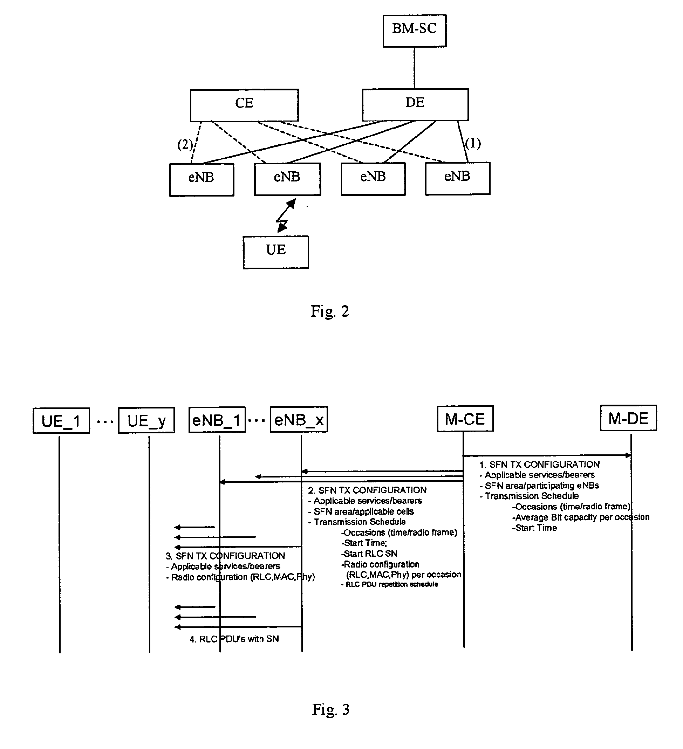

In MBMS systems using an SFN mode of operation, there is a Central Entity (CE) handling the scheduling of the MBMS user data. This MBMS CE ensures that at each MBMS transmission on the radio interface, the participating eNBs transmit identical MBMS user data.
The MBMS central entity may be allocated to a different node than the node distributing the MBMS user data Distribution Entity (DE), i.e., there may be a separate Distribution Entity. Figure 2 shows the corresponding MBMS logical/functional architecture.
Concerning interface (1), there seems to be agreement that the conventional MBMS DE should refrain from indicating the exact radio resources (PRBs) to be used for each user data packet. Instead, the primary candidate solution considered is one in which the DE attaches a Sequence Number (SN) to all user data the DE forwards to the ENB via an S1 interface, which is defined in TS36.300 v8.30.
This SN is assumed to be a byte-based number, e.g., similar to the TCP sequence number: the SN would, e.g., correspond to the SN of the first byte in an MBMS packet. To allocate the SNs consistently for one 'MBMS pipe', the MBMS DE must be aware of which services/user data is applied to the same 'MBMS pipe'.
Concerning interface (2), the MBMS CE would indicate:

 a Starting Time (ST), e.g. indicating the first occasion of this MBMS pipe i.e. the occasion at which the byte with SN=0 is transmitted

the periodicity of the transmission occasions for this MBMS pipe (i.e. the N in the example of figure 1)

the details of the radio resources used, which will be the same for each occasion of the MBMS pipe (i.e. the green marked PRBs in the example of figure 1)

It may be desirable for the MBMS DE to know the capacity available for MBMS transmission and the eNB buffering capacity. Then, e.g. if the capacity is 200 bytes per second using one occasion per second, then both the MBMS CE and the MBMS DE will know that for a packet labeled with SN=300, the transmission should start in the second half of the transmission occasion at ST+1.

In MBMS systems using an SFN mode of operation, as described in the following section, the RLC and Medium Access Control (MAC) layers are located in the eNB while complete Internet Protocol (IP) packets containing MBMS user data are transmitted over the S1 interface. Since the size of the MBMS user data packets could be large (e.g., several hundreds of bytes), the RLC layer must support segmentation/re-assembly as was shown in document R2-063297 (Source: Nokia; Title: "Radio Link Layer and Content Synchronization for MBMS"; submitted to RAN2 meeting #56).

The support of segmentation normally requires that RLC Packet Data Units (PDUs) include a sequence number. This RLC SN enables the receiver (UE) to determine from which RLC PDU's segments can be combined to complete RLC Service Data Units (SDUs): contents from RLC PDU's with subsequent sequence numbers (SN's) can be concatenated.

All eNBs participating in the SFN mode of operation need to transmit identical MBMS contents via the same radio resources. This MBMS contents includes the RLC control information, meaning that all eNBs will need to include an identical RLC SN, or an operation without RLC SN should be possible. It is currently unclear how this can be achieved.

As mentioned above, it is presently unclear how the RLC will operate in the case of this distributed segmentation/re-assembly.

SUMMARY OF THE INVENTION

It is therefore an aim of the present invention to provide a method of operating RLC in case of distributed segmentation / re-assembly.

According to an aspect of the present invention, there is provided a method of broadcasting in a telecommunications network in a segmentation/re-assembly mode, wherein segmentation and/or re-assembly is performed based on sequence number information generated from a transmission schedule.

This method enables usage of an identical RLC SN for the same MBMS data from different eNBs, thus enabling an "SFN mode of operation" for MBMS transmissions from different eNBs.

According to another aspect of the present invention, there is provided a method of broadcasting in a telecommunications network in a segmentation/re-assembly mode, wherein segmentation and/or re-assembly is performed based on ordering information from a transmission schedule.

This method enables segmentation/re-assembly of RLC PDU's without an RLC SN transmitted on the radio as part of every PDU. These solutions allow "SFN mode of operation" and have the additional benefit of a reduced RLC overhead (around 1% overhead reduction).According to one exemplary embodiment of the present invention, ciphering/deciphering of RLC PDU's based on an RLC PDU SN without transmitting this RLC SN on the radio as part of every PDU is enabled.

BRIEF DESCRIPTION OF THE DRAWINGS

The above and other features and advantages of an exemplary embodiment of the present invention will be more apparent from the following detailed description taken in conjunction with the accompanying drawings, in which:

Fig. 1  illustrates an example of a 'MBMS pipe' according to the prior art;

Fig. 2  illustrates the architecture of MBMS systems using a SFN mode of operation according to the prior art;

Figs. 3  to 5 are schematic illustrations of three transmission schedule exchanges according to three different exemplary embodiments of the present invention;

Fig. 6  is a block diagram of an eNB;

Fig. 7  is a schematic diagram illustrating transmitter operation of an eNB;

Fig. 8  is a block diagram of an NE;

Fig. 9  is a schematic diagram illustrating receiver operation of an NE;

Fig. 10  is a schematic diagram of a model of two unacknowledged mode peer entities configured for use without duplicate avoidance and recording extracted from 3GPP specification TR 25.332;

Fig. 11  is a schematic diagram of a model of two unacknowledged mode peer entities configure for use with duplicate avoidance and recording extracted from TR 25.332;

Fig. 12    is a schematic diagram of UMP PDU.

DETAILED DESCRIPTION OF THE EXEMPLARY EMBODIMENTS

Hereinafter, exemplary embodiments of the present invention will be described in detail with reference to the accompanying drawings. The same reference numerals denote identical structural elements throughout all the drawings. In the following description of the present invention, a detailed description of known functions and configurations incorporated herein will be omitted when it may make the subject matter of the present invention rather unclear.

In the following some background information is provided describing legacy RLC Unacknowledged Mode (UM) operation.

Description of legacy RLC UM operation

RLC model and functionality

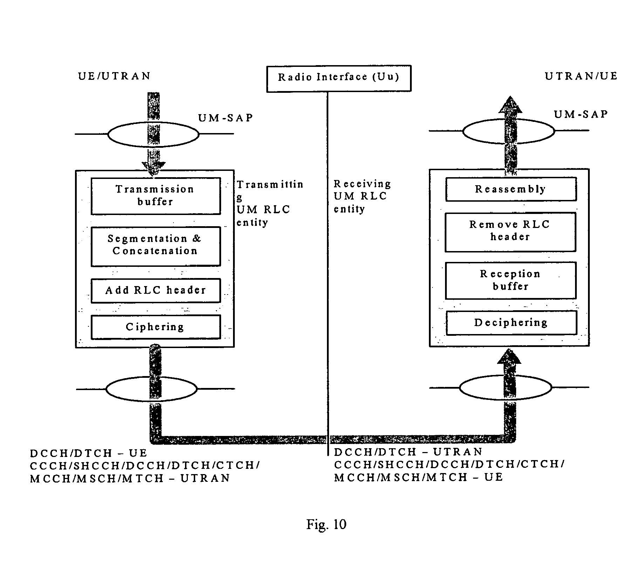

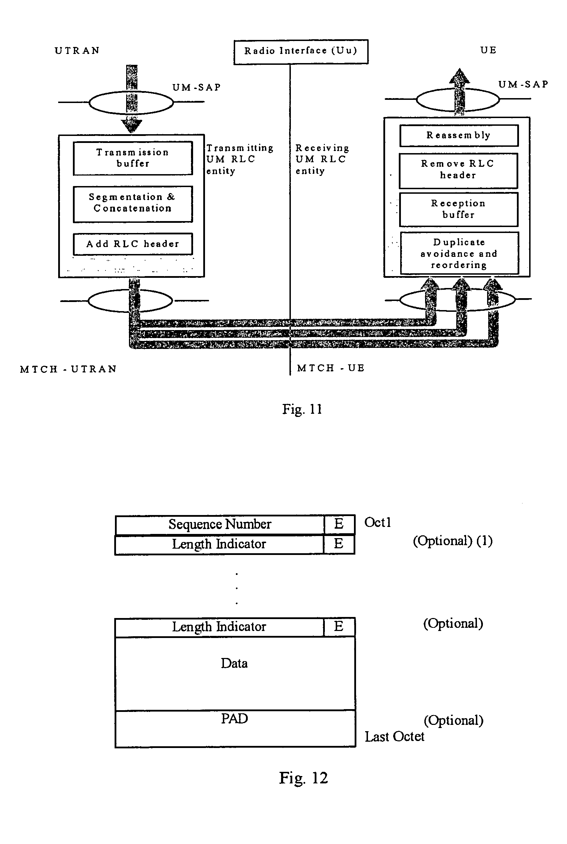

Fig. 10 illustrates a model of two unacknowledged mode peer entities configured for use without duplicate avoidance and reordering, and Fig. 11 illustrates a_model of two unacknowledged mode peer entities configured for use with duplicate avoidance and reordering. Both Figs. 10 and 11 are extracted from TR 25.322.

RLC functionality

RLC UM mode supports the transfer of user data (i.e. service data units, SDUs) and includes the following sub-functions:

Basic functionality
Segmentation and re-assembly
Concatenation
Padding
Ciphering
SDU discarding
Out of sequence SDU delivery (Multicast Control CHannel (MCCH))
Duplication avoidance and re-ordering (Multicast Traffic Channel (MTCH))
Repeated PDU transmission (MCCH)
Out of sequence reception

Some functions are only applicable for specific logical channels, indicated in between brackets in the above. Moreover, some combinations of functionality are not possible e.g. Out of sequence SDU delivery and ciphering.

High level description, transmitter side

The transmitting UM-RLC entity receives RLC SDUs from upper layers. The transmitting entity segments these into Unacknowledged Mode Data (UMD) PDUs of appropriate size, if the RLC SDU is larger than the length of available space in the UMD PDU. The UMD PDU may contain segmented and/or concatenated RLC SDUs. UMD PDU may also contain padding to ensure that it is of a valid length. Length Indicators are used to define boundaries between RLC SDUs within UMD PDUs unless the "Extension bit" already indicates that a UMD PDU contains exactly one complete SDU. Length Indicators are also used to define whether Padding is included in the UMD PDU.

If ciphering is configured and started, a UMD PDU is ciphered (except for the UMD PDU header) before it is submitted to the lower layer.

The transmitting UM RLC entity submits UMD PDUs to the lower layer via the applicable logical channel.

High level description, receiver side

The receiving UM-RLC entity receives UMD PDUs via the applicable logical channel from the lower layer.

When Duplicate avoidance and Reordering (DaR) is configured, there may be one or more than one input from the lower layer. Inputs can be added or removed without changing the buffer contents, state variables, or timers within the receiving UM RLC entity. Where duplicate avoidance and reordering is not configured there is only one input from the lower layer and the input is not reconfigured.

When configured, duplicate avoidance and reordering is the first function that is applied to the input UMD PDU streams in the receiving UM RLC entity. The UM RLC entity completes duplicate detection and re-ordering of the UMD PDUs that are received from the one or more inputs, producing a single ordered sequence of PDUs that is passed to the next receiver function. DaR can only be configured in a UE; DaR is not used in UTRAN.

If ciphering is configured and started, the receiving UM RLC entity deciphers the received UMD PDUs, except for the UMD PDU header. If segmentation and/or re-assembly has been performed by the transmitting UM RLC entity, the UM RLC entity removes RLC headers from received UMD PDUs, and reassembles RLC SDUs.

If a receiving UM RLC entity is configured for an out of sequence SDU delivery, the UM RLC entity will reassemble SDUs and transfer the SDUs to the upper layers as soon as all of the PDUs that contain the SDU have been received, even if earlier PDUs have not yet been received. The UM RLC entity will store PDUs pending the retransmission of missing PDUs by the transmitting UM RLC. PDUs are removed from storage after recovery of all of its associated SDUs, or by a sequence number window function or a storage timer. Out of sequence SDU delivery is configured only in the UE and is only used with MCCH.

RLC SDUs are delivered by the receiving UM RLC entity to the upper layers through the Unacknowledged Mode Service Access Point (UM-SAP).

Configuration parameters

Clauses 10.3.4.23 and 10.3.4.23a of TS 25.331 specify the RLC UM configuration parameters that UTRAN may assign to the UE.

| Direction | Transmitter | Receiver | Comment |
|---|---|---|---|
| Uplink | UE >Discard timer | | There is no discard notification |
| Downlink | | UE<br>>LI size<br>>Reception Window Size<br>>DaR info<br>>>Timer_DAR<br>>>Window size DAR<br>>OoSsD info<br>>>Timer_OSD<br>>>Window size OSD | |

PDU format

The single PDU format that is used for RLC UM is specified in clause 9.2.1.3 of TS 25.322. This section also covers the description of the fields that may be included in the PDU header.

UMD PDU

The UMD PDU is used to transfer user data when RLC is operating in unacknowledged mode. The length of the data part shall be a multiple of 8 bits. The UMD PDU header consists of the first octet, which contains the "Sequence Number". The RLC header consists of the first octet and all the octets that contain "Length Indicators".

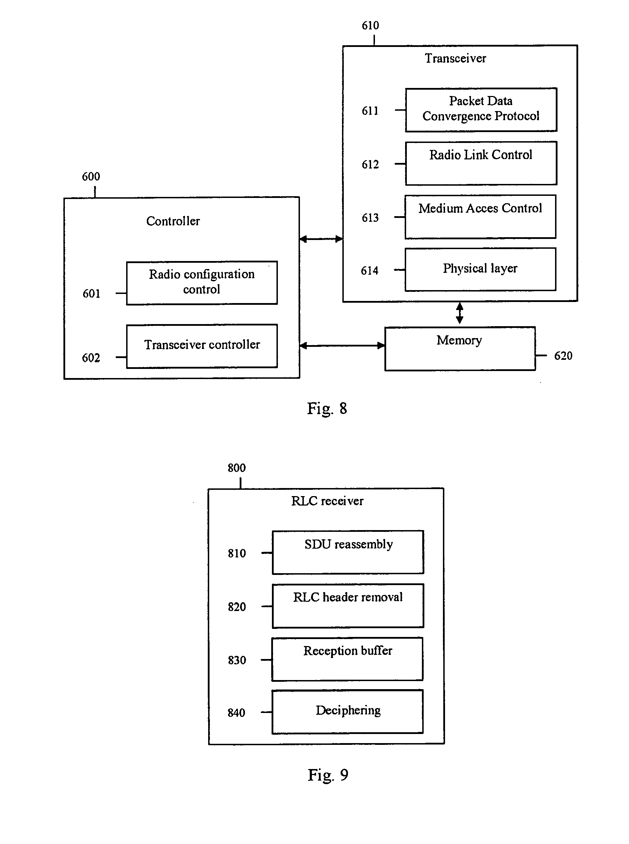

Figure 9.2 illustrates an MD PDU, and is extracted from Ts 25.322. The "Length Indicator" in this case may be 15 bits.

Sequence Number (SN)

This field indicates the "Sequence Number" of the RLC PDU, encoded in binary.

| PDU type | Length | Notes |
|---|---|---|
| UMD PDU | 7 bits | Used for reassembly |

Extension bit (E)

Length: 1bit.

The interpretation of this bit depends on RLC mode and higher layer configuration:

In the UMD PDU, the "Extension bit" in the first octet has either the normal E-bit interpretation or the alternative E-bit interpretation depending on higher layer configuration. The "Extension bit" in all the other octects always has the normal E-bit interpretation.

Normal E-bit interpretation:

| Bit | Description |
|---|---|
| 0 | The next field is data, piggybacked STATUS PDU or padding |
| 1 | The next field is Length Indicator and E bit |

Alternative E-bit interpretation:

| Bit | Description |
|---|---|
| 0 | The next field is a complete SDU, which is not segmented, concatenated, or padded. |
| 1 | The next field is Length Indicator and E bit |

Length Indicator (LI)

Unless the "Extension bit" indicates that a UMD PDU contains a complete SDU that is not segmented, concatenated or padded, a "Length Indicator" is used to indicate the last octet of each RLC SDU ending within the PDU. If the "Extension bit" indicates that the UMD PDU contains a complete SDU, which is not segmented, concatenated or padded, no LIs are present in this UMD PDU.

Except for the predefined values reserved for special purposes and listed in the tables below, the "Length Indicator" shall:

> be set to the number of octets between the end of the RLC header and up to and including the last octet of an RLC SDU segment;
> be included in the PDUs that they refer to.

The size of the "Length Indicator" may be either 7 bits or 15 bits. The "Length Indicator" size is determined independently for uplink and downlink. The value of a "Length Indicator" shall not exceed the values specified in subclauses 11.2.4.2 for UMD PDUs.

The "Length Indicators" which refer to the same PDU shall:

> not be reordered in case of retransmission;
> be in the same order as the RLC SDUs that they refer to.
> For UM uplink:
> if the "largest UL UMD PDU size" is ≤ 125 octets:
> 7-bit "Length Indicators" shall be used.
> else:
> 15-bit "Length Indicators" shall be used.

For UM downlink:

> the "Length Indicator" size provided in "DL RLC UM LI size" shall be used.

For UM:

> between modifications of the "largest UMD PDU size", the size of the "Length Indicator" is the same for all UMD PDUs;
> if the RLC SDU begins in the beginning of the RLC PDU; and
> if the RLC PDU is transmitted in uplink; and

if the "Length Indicators" indicating that a RLC SDU ended exactly in the end or one octet short (only when 15-bit "Length Indicators" is used) of the previous RLC PDU are not present; and

if the "Extension bit" does not indicate that the UMD PDU contains a complete SDU which is not segmented, concatenated or padded; and

if the "Length Indicator" indicating that the first data octet in this RLC PDU is the first octet of an RLC SDU and the last octet in this RLC PDU is the last octet of the same RLC SDU is not present; and

if the "Length Indicator" indicating that the first data octet in this RLC PDU is the first octet of an SDU and the same RLC SDU is one octet short of exactly filling the PDU (only when 15-bit "Length Indicators" is used) is not present:

if 7-bit "Length Indicator" is used:

the "Length Indicator" with value "111 1100" shall be used.

if 15-bit "Length Indicator" is used:

the "Length Indicator" with value "111 1111 1111 1100" shall be used. in downlink:

if 7-bit "Length Indicator" is used:

the Receiver shall be prepared to receive the "Length Indicator" with value "111 1100";

the Receiver shall follow the discard rules in subclause 11.2.3 both when the "Length Indicator" with value "111 1100" is present and when it is absent.

if 15-bit "Length Indicator" is used:

the Receiver shall be prepared to receive the "Length Indicator" with value "111 1111 1111 1100";

the Receiver shall follow the discard rules in subclause 11.2.3 both when the "Length Indicator" with value "111 1111 1111 1100" is present and when it is absent.

In the case where the end of the last segment of an RLC SDU ends exactly at the end of a PDU and there is no "Length Indicator" that indicates the end of the RLC SDU, and the "Extension bit" of the following PDU does not indicate that the UMD PDU contains a complete SDU which is not segmented, concatenated or padded, and the "Length Indicator" of the following PDU does not indicate that the first data octet in that PDU is the first octet of an SDU and the last octet in that PDU is the last octet of the same SDU, and the "Length Indicator" of the following PDU does not indicate that the first data octet in that RLC PDU is the first octet of an SDU and the same RLC SDU is one octet short of exactly filling the PDU (only when 15-bit "Length Indicators" is used):

if 7-bit "Length Indicator" is used:
a "Length Indicator" with value "000 0000" shall be placed as the first "Length Indicator" in the following PDU;
if 15-bit "Length Indicator" is used:

a "Length Indicator" with value "000 0000 0000 0000" shall be placed as the first "Length Indicator" in the following PDU.

In the case where a PDU contains a 15-bit "Length Indicator" indicating that an RLC SDU ends with one octet left in the PDU, the last octet of this PDU shall:

be padded by the Sender and ignored by the Receiver though there is no "Length Indicator" indicating the existence of Padding; and
not be filled with the first octet of the next RLC SDU data.

In the case where 15-bit "Length Indicators" are used in a PDU and the last segment of an RLC SDU is one octet short of exactly filling the PDU and there is no "Length Indicator" that indicates the end of the RLC SDU:

if a 15-bit "Length Indicator" is used for the following PDU:
the "Length Indicator" with value "111 1111 1111 1011" shall be placed as the first "Length Indicator" in the following PDU;
the remaining one octet in the current PDU shall be padded by the Sender and ignored at the Receiver though there is no "Length Indicator" indicating the existence of Padding;
if a 7-bit "Length Indicator" size is configured for the following PDU:

if RLC is configured for UM mode:

if the "Extension bit" of that PDU does not indicate that the UMD PDU contains a complete SDU which is not segmented, concatenated or padded, and the "Length Indicator" of that PDU does not indicate that the first data octet in that PDU is the first octet of an SDU and the last octet in that PDU is the last octet of the same SDU:

> the "Length Indicator" with value "000 0000" shall be placed as the first "Length indicator" in the following PDU;
> the "Sequence Number" shall be incremented by 2 before it is transmitted.

For UM and AM RLC:

if a 7 bit "Length Indicator" is used in a RLC PDU and one or more padding octets are present in the RLC PDU after the end of the last RLC SDU:

> indicate the presence of padding by including a "Length Indicator" with value "1111111" as the last "Length Indicator" in the PDU.
> if a 15 bit "Length Indicator" is used in a RLC PDU and two or more padding octets are present in the RLC PDU after the end of the last RLC SDU:

> > indicate the presence of padding by including a "Length Indicator" with value "111 1111 1111 1111" as the last "Length Indicator" in the PDU.

NOTE: After the "Length Indicator" indicating the presence of padding has been included in the RLC PDU, the length of the padding may be zero.

In the case where the "alternative E-bit interpretation" is configured for UM RLC and an RLC PDU contains a segment of an SDU but neither the first octet nor the last octet of this SDU:

if a 7-bit "Length Indicator" is used:
the "Length Indicator" with value "111 1110" shall be used.
if a 15-bit "Length Indicator" is used:
the "Length Indicator" with value "111 1111 1111 1110" shall be used.

In the case where the "alternative E-bit interpretation" is configured for UM RLC and the first data octet in this RLC PDU is the first octet of an SDU and the last octet in this RLC PDU is the last octet of the same SDU:

if a 7-bit "Length Indicator" is used:

> the "Length Indicator" with value "111 1101" shall be used.
> if a 15-bit "Length Indicator" is used:
> the "Length Indicator" with value "111 1111 1111 1101" shall be used.

In the case where the "alternative E-bit interpretation" is configured for UM RLC and the first data octet in this RLC PDU is the first octet of an SDU and the same RLC SDU is one octet short of exactly filling the PDU and a 15-bit "Length Indicator" is used:

the "Length Indicator" with value "111 1111 1111 1010" shall be used.

If a "Length Indicator" is still awaiting transmission and there is no RLC SDU available, an RLC PDU consisting of this "Length Indicator", the appropriate padding "Length Indicator" and padding may be transmitted.

Predefined values of the "Length Indicator" are used to indicate padding. The values that are reserved for special purposes are listed in the tables below depending on the size of the "Length Indicator". Only predefined "Length Indicator" values can refer to the padding space. These values shall only be placed after all other "Length Indicators" for a PDU.

Length: 7 bits

| Bit | Description |
|---|---|
| 0000000 | The previous RLC PDU was exactly filled with the last segment of an RLC SDU and there is no "Length Indicator" that indicates the end of the RLC SDU in the previous RLC PDU. |
| 1111100 | UMD PDU: The first data octet in this RLC PDU is the first octet of an RLC SDU. |

(continued)

| Bit | Description |
|---|---|
| 1111101 | UMD PDU: The first data octet in this RLC PDU is the first octet of an RLC SDU and the last octet in this RLC PDU is the last octet of the same RLC SDU |
| 1111110 | UMD PDU: The RLC PDU contains a segment of an SDU but neither the first octet nor the last octet of this SDU. |
| 1111111 | The rest of the RLC PDU is padding. The padding length can be zero. |

Length: 15bits

| Bit | Description |
|---|---|
| 000000000000000 | The previous RLC PDU was exactly filled with the last segment of an RLC SDU and there is no "Length Indicator" that indicates the end of the RLC SDU in the previous RLC PDU. |
| 111111111111010 | UMD PDU: The first data octet in this RLC PDU is the first octet of an RLC SDU and the second last octet in this RLC PDU is the last octet of the same RLC SDU. The remaining one octet in the RLC PDU is ignored. |
| 111111111111011 | The last segment of an RLC SDU was one octet short of exactly filling the previous RLC PDU and there is no "Length Indicator" that indicates the end of the RLC SDU in the previous RLC PDU. The remaining one octet in the previous RLC PDU is ignored. |
| 111111111111100 | UMD PDU: The first data octet in this RLC PDU is the first octet of an RLC SDU. |
| 111111111111101 | UMD PDU: The first data octet in this RLC PDU is the first octet of an RLC SDU and the last octet in this RLC PDU is the last octet of the same RLC SDU. |
| 111111111111110 | UMD PDU: The RLC PDU contains a segment of an SDU but neither the first octet nor the last octet of this SDU. |
| 111111111111111 | The rest of the RLC PDU is padding. The padding length can be zero. |

Data field

RLC SDUs or segments of RLC SDUs are mapped to this field in transparent, unacknowledged and acknowledged modes.
Transparent mode data:

the length of RLC SDUs is not constrained to a multiple of 8 bits;
if "Segmentation" is configured:

all the RLC PDUs carrying segments of a RLC SDU shall be sent in one TTI;
only RLC PDUs carrying segments from a single RLC SDU shall be sent in one TTI;
otherwise (Segmentation is not configured):

TMD PDU size is fixed within a single TTI and is equal to the RLC SDU size.
Unacknowledged mode data and Acknowledged mode data:

the length of RLC SDUs is constrained to a multiple of 8 bits;
the last segment of an RLC SDU shall be concatenated with the first segment of the next RLC SDU in order to fill the data field completely and avoid unnecessary padding unless otherwise specified in subclause 9.2.2.8 or subclause 11.2.2.2. The "Length Indicator" field is used to point the borders between RLC SDUs (see subclause 9.2.2.8).

Padding (PAD)

All unused space in a PDU shall be located at the end of the PDU and is referred to as padding. Padding shall have a length such that the PDU as a whole has one of the predefined total lengths.

Padding may have any value and the Receiver and the Sender shall disregard it.

In the following three different exemplary embodiments of the present invention are described.

A possible solution to the above described problem of RLC operation is the case of distributed segmentation/re-assembly is the use of an 'RLC level' SN on S1 as well as on Uu, which is also defined in TS36.300 v8.30.

In this approach, the eNB just forwards the segmented packet received across S1 re-using the 'RLC level' SN provided at this interface also over the Uu-interface. In this solution the MBMS DE (M-DE) actually performs the segmentation taking into account the available radio resources.

In principle, this solution more or less implies that the M-DE indicates the exact radio resources (PRBs) to be used for each user data packet, i.e. it violates the agreement that the M-DE should refrain from indicating the actual PRBs to be used for an MBMS user data packet.

### First exemplary embodiment: An 'RLC level' SN is used on Uu but not on S1

In this embodiment all participating eNBs generate the RLC level SN in the same manner, so that the resulting SN used at the Uu interface for an RLC PDU send at a certain time/resource location by different eNB's is the same. The eNBs could generate the RLC SN e.g. as follows:

The eNB is in advance informed about the RLC PDU transmission schedule, including the RLC SN used for one PDU send at a specific occasion (e.g. at the Start Time).

Based on this information, the RLC SN for each next PDU can be determined.

In more detail, the transmission schedule description may e.g. consist of:

The occasions, possibly specified by time or a radio frame number, at which an RLC PDU will be transmitted, with 1 RLC PDU transmitted per occasion. In this case:

$$\text{RLC SN}\{\text{occasion}(x)\} = \text{RLC SN}\{\text{occasion}(x-1)\} + 1$$

The occasions, possibly specified by time or radio frame number, at which one or more RLC PDU's will be transmitted, and a specified number of RLC PDUs transmitted per occasion.

If we have e.g. N RLC PDU's at occasion x-1, then the sequence number for the first PDU in occasion x can be determined by:

$$\text{RLC SN}\{\text{occasion}(x)\} = \text{RLC SN}\{\text{first PDU at occasion}(x-1)\} + N$$

Subsequent RLC PDU's in occasion x can obtain subsequent sequence numbers.

c) The occasions, possibly specified by time or radio frame number, at which an RLC PDU will be repeated. If an RLC PDU is repeated, it will obtain the same sequence number as used for the first transmission.

This RLC SN can then be used as an input for the ciphering algorithm (at the eNB) and deciphering (at the UE) of the RLC PDU.

The RLC SN can also be used for segmentation/re-assembly:

The eNB should segment SDU's received from the M-DE only across PDU's with subsequent sequence numbers.

The UE should only concatenate the first segment in the RLC PDU with RLC SN(x) with the last segment in the RLC PDU with RLC SN(x-1).

Note that this solution also works if the ENB starts participating in the transmission at a later point in time. When the eNB knows the Start Time and the MBMS transmission schedule used since that point in time, it can determine the RLC SN of any subsequent RLC PDU regardless of whether it participated in earlier transmissions.

In this solution, which is in accordance with the agreement that the DE should refrain from indicating the actual PRBs to be used for an MBMS user data packet, the RLC in the eNB performs the segmentation and possibly ciphering.

Second exemplary embodiment: An 'RLC level' SN is neither used on S1 nor on Uu -

Implicit RLC SN

In the previous solution the participating eNBs generate SN for the RLC PDUs according to an RLC transmission schedule. In addition to the eNB, this transmission schedule can also be made known to the UE. In that case the UE is able to determine the RLC SN in a similar fashion as the way in which the eNB sets the information in the previous solution. Since, in this case, both UE and eNB will derive the RLC SN for an RLC PDU based on the RLC PDU transmission schedule, there is no need for the SN to be transmitted on the Uu interface.

In this solution the RLC operates in a separate mode. This mode is similar to the well know RLC UM mode, with the exception that the SN is not signalled.

This solution, similar to the above-preceding solution, is in accordance with the agreement that the DE should refrain from indicating the actual PRBs to be used for an MBMS user data packet. Furthermore, also in this solution the RLC in the eNB performs the segmentation and re-assembly.

This solution can be used in case support for segmentation/re-assembly and/or support for ciphering/deciphering is required at RLC level.

Note that also this solution works if the UE/eNB starts participating in the transmission at a later point in time. When the UE/eNB knows the Start Time and the MBMS transmission schedule used since that point in time, the UE/eNB can determine the RLC SN of any subsequent RLC PDU regardless of whether it participated in earlier transmissions.

Third exemplary embodiment: An 'RLC level' SN is neither used on S1 nor on Uu -

No RLC SN

If no explicit RLC SN is required to be allocated to every RLC PDU, e.g., no ciphering of PDU's must be supported, the following solution may be used:

Both the eNB and the UE are informed about the PDU transmission schedule in advance.

The transmission schedule description may e.g. consist of:

a) The occasions, possibly specified by time or radio frame number, at which a PDU will be transmitted, with one PDU transmitted per occasion. In this case:
The first segment in the RLC PDU in an occasion 'x' may be concatenated with the last segment in the RLC PDU in occasion x-1.
b) The occasions, possibly specified by time or radio frame number, at which one or more PDU's will be transmitted, and a specified number of PDUs transmitted per occasion. In this case:

Segments in subsequent RLC PDU's at occasion x may be concatenated;
The first segment in the first RLC PDU in occasion x may be concatenated to the last segment in the last RLC PDU in occasion x-1.

c) The occasions, possibly specified by time or radio frame number, at which an RLC PDU will be repeated.

If the transmission schedule also specifies RLC PDU repetitions, the same re-assembly mechanisms as specified under a) and b) above applies, but with respect to the previous different PDU. For example, if the repetition for an RLC PDU take place at subsequent transmission occasions, this would mean:

For case a): the first segment in the RLC PDU in occasion x can be concatenated to the last segment in the RLC PDU in occasion x-1-y, where "y" is the smallest integer for which (x-y-1) points to an occasion which has a different contents than occasion x.
For case b): information at the beginning of the first PDU in occasion x can be concatenated to information at the end of the last PDU in occasion x-1-y, where "y" is the smallest value that refers points to an occasion which has a different contents than occasion x.

Schedules with interleaved transmissions/repetitions can also be supported. As long as the "previous PDU" is always clearly identifiable from the schedule information, re-assembly of segments will always be possible.

Although the above is a description of potential segment re-assembly at the receiver, the same rules can be used for determining, at the transmitter, across which RLC PDU's segments of an SDU can be allocated.

Note that this solution also works if the UE/eNB start participating in the transmission at a later point in time. When the UE/eNB knows the ordering of RLC PDU's from the MBMS transmission schedule, the UE/eNB will know how re-assembly/segmentation can be performed.

In this solution, which is in accordance with the agreement that the M-DE should refrain from indicating the actual PRBs to be used for an MBMS user data packet, the RLC in the eNB performs the segmentation.

For all three exemplary embodiments of the present invention it is essential that the correct nodes are aware of an MBMS transmission schedule. Figure 3 illustrates how the transmission schedule configuration can be exchanged between the nodes that need to be aware of the schedule in the first embodiment.

In the first exemplary embodiment of the present invention, the M-CE could originate the transmission schedule applicable for the RLC PDU's of an SFN pipe, and inform the M-DE about it so that it knows how quickly (bits/sec) to send MBMS packets to the eNB's (msg1). In addition the MBMS-CE (M-CE) informs all eNB's about the schedule so that they can generate the RLC PDU SN's as described above, and perform segmentation/ciphering appropriately (msg 2).

Although not shown in the figure, also the UE's may be informed about the transmission schedule e.g. as part of msg3, which could be a broadcasted flow from each cell where the concerning SFN transmission is performed: however this would not be related to RLC SN generation, but enable power saving discontinuous transmission operation with respect to the RLC PDU's (msg 4), the UE's would just work with the RLC SN's that they receive with respect to re-assembly/deciphering.

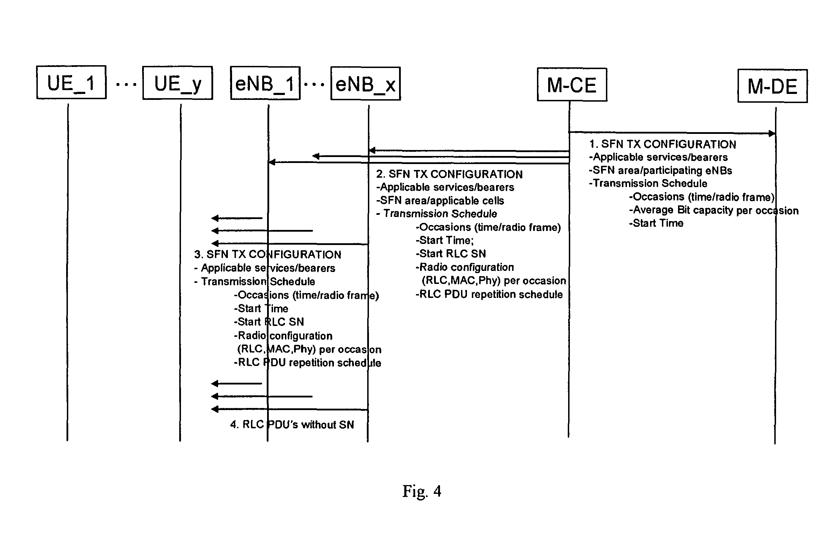

Figure 4 shows a possible exchange for the transmission schedule for the second exemplary embodiment.

In this "Implicit RLC SN" solution, both the UE and the eNB need to be fully aware of the transmission schedule. In the example in figure 4, the UE is informed about the transmission schedule through a broadcast from each cell providing the concerning SFN transmission as part of flow 3.

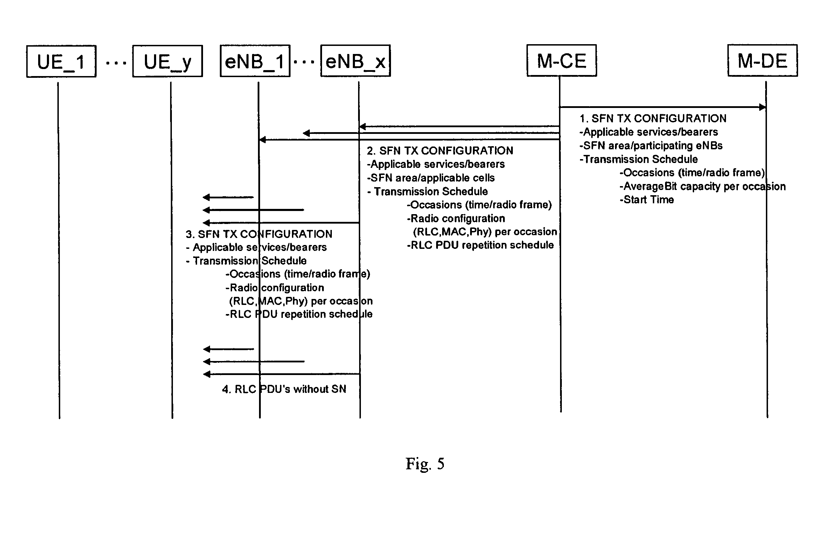

Figure 5 shows a possible transmission schedule exchange signaling sequence for the third exemplary embodiment.

It should be noted that in the third exemplary embodiment of the present invention, packets do not have to be labeled with any RLC SN (not implicitly nor explicitly): it is only important for the UE and the eNB to have a common understanding with respect to which RLC PDU's have subsequent contents, and thus segments of these RLC PDU's can be combined. How eNB's and UE's can derive this from the transmission schedule information was described above.

Supported RLC functionality

The RLC UM mode of operation of the first and second exemplary embodiments may operate fully in accordance with the existing RLC UM mode (as described above), with the exception of the following limitations:

Used for logical channels with (semi) static scheduling e.g. MTCH: the transmission schedule is according to a predefined (semi) static RLC PDU transmission schedule
Repeated PDU transmissions also only according to a fixed pre-configured repetition pattern
All other existing RLC UM functionality can be used in conjunction with this improvement proposal i.e. including (not necessarily complete summary):

   Segmentation and re-assembly, concatenation and padding
   Ciphering
   SDU discarding
   Repeated PDU transmission, provide this is according to a pre-configured repetition pattern
   Out of sequence reception
   Out of sequence SDU delivery
   Duplication avoidance and re-ordering
   Alternative E-bit interpretation

The RLC UM mode of operation of solution the third exemplary embodiment of the present invention is a bit more limited due to the absence of an RLC SN. As a result e.g. ciphering cannot easily be supported at RLC level.

eNB description

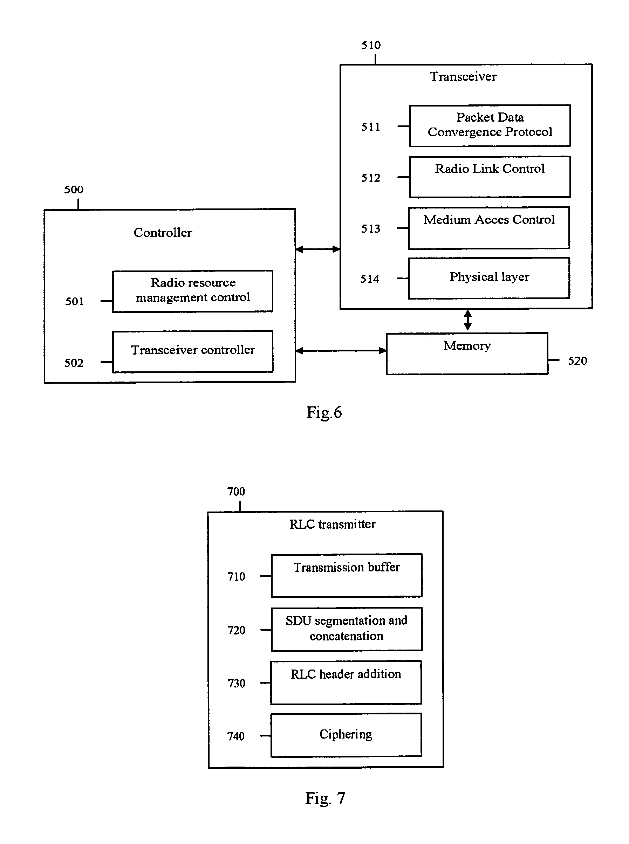

Fig. 6 illustrates a block diagram of an eNB, and Fig. 7 schematically illustrates the transmission of an eNB.

In step 710, transmitting entity buffers upper layer data, which is processed as an appropriate format. The transmitting entity receives SDUs from upper layers and places them in the appropriate RLC PDU, in step 720. This placement can, for example, be based on a byte-based sequence number provided by the MBMS-DE (M-DE) used in combination with the transmission schedule, but this mechanism is not part of this invention. Segmentation to different RLC PDU's should only be performed to RLC PDU's with subsequent RLC SN's (first and second exemplary embodiments) or to RLC PDU's determined as "subsequent" in the order indicated in the transmission schedule. Repetitions will have to be scheduled in accordance with the repetition schedule.

Next the RLC header will have to be added, in step 730: in the first embodiment this means adding an RLC SN as described above. In the second and third no RLC SN is actually added to the RLC header.

Ciphering may be performed in the first and second exemplary embodiments of the present invention, in step 740 based on the derived RLC SN.

UE description

Fig. 8 is a schematic diagram of a UE and Fig. 9 schematically illustrates the receiver operation of a UE.

At the receiver, compared to the transmitter, a reverse sequence is followed.

First deciphering is performed, in step 840, for the first and second exemplary embodiments of the present invention. In the first embodiment deciphering is performed based on the received RLC SN; in the second embodiment, deciphering is based on the RLC SN computed based on the transmission schedule.

Next the received RLC PDU's are buffered and processed:

In the first exemplary embodiment of the present invention, the SDU re-assembly, in step 810, is based on the received RLC SN: based on this RLC SN the receiver can derive from which RLC PDU transmissions segments can be combined.

In the second exemplary embodiment of the present invention, the SDU reassembly, in step 810, is based on the RLC SN computed based on the transmission schedule, Start Time and Start SN.

In the third exemplary embodiment of the present invention, the SDU re-assembly is based on the RLC PDU ordering information included in the transmission schedule:

Two implementation options:

The SDU re-assembly might be fully aware of the transmission schedule information and the reception timing and therefore be able to determine on its own from which PDUs segments can be combined.

Alternatively a lower layer (e.g., the reception buffer layer) could be aware of the transmission schedule (e.g., enabling storage of only one copy of a repeated PDU), pass the PDU's in sequence to the SDU re-assembly, and indicate towards the SDU re-assembly for each PDU whether information provided in a that PDU can be combined with information from the previously provided PDU or not.

Note that from the receiver's point of view, the first embodiment requires no special handling compared to, e.g., the UMTS RLC operation described above.

A potential drawback of all these solutions, compared to the possible solution described above, is that there is some restriction in the scheduling freedom. I.e. all 3 embodiments work with a transmission schedule that must be used for some time, and according to which transmissions and repetitions need to take place.

Summary of the main embodiments

1) Generate RLC sequence numbers (SNs) based on a pre-known RLC PDU transmission schedule.
If different eNB's are informed about the transmission schedule, different eNB's can generate the same RLC SN for RLC PDU's transmitted at the same time/resource location (first embodiment), and use this RLC SN on the radio interface.
If in addition, the UE's are also informed about the transmission schedule, the UE can also locally generate the RLC SN's for received RLC PDU's. In this case there is no longer a need to transmit the RLC SN with the RLC PDU (in accordance with the second exemplary embodiment of the present invention).
2) Rely on the RLC PDU ordering information in an RLC PDU transmission schedule for determining to which RLC PDU's, segments of an RLC SDU can be distributed (transmitter), or of which received RLC PDU's segments can be concatenated (receiver) (in accordance with the third exemplary embodiment of the present invention).

This will allow segmentation/re-assembly without having to send any RLC SN's with every RLC PDU.
It will be understood that the embodiments of the present invention are described herein by way of example only, and that various changes and modifications may be made without departing from the scope of the invention.

**Claims**

**1.** A method of broadcasting in a telecommunications network in a segmentation/re-assembly mode, comprising segmenting and/or re-assembling based on sequence number information generated from a transmission schedule.

2. The broadcasting method of claim 1, wherein the sequence number information is used on the Uu interface.

3. The broadcasting method of claim 1, wherein the sequence number information is not used on the S 1 interface.

4. The broadcasting method of claim 1, wherein a plurality of network elements participating in the segmentation/re-assembly mode generate the sequence number information in a same manner, so that resulting sequence number information used for one data packet at a specific occasion is the same for the plurality of network elements.

5. The broadcasting method of claim 1, wherein a plurality of network elements participating in the segmentation/re-assembly mode generate sequence number information in the same manner, so that the resulting sequence number information used for one protocol data unit at a specific occasion is the same for the plurality of network elements.

6. The broadcasting method of claim 1, wherein a single frequency network mode of operation is used for broadcasting.

7. The broadcasting method of claim 5, wherein the specific occasion is specified by a time or radio frame number at which one or more packet data units are transmitted.

8. The broadcasting method of claim 1, wherein the sequence number information is generated from a packet data unit transmission schedule.

9. The broadcasting method of claim 8, wherein the packet data unit transmission schedule enables a determination of the sequence number information for each packet data unit.

10. The broadcasting method of claim 8, wherein the packet data unit transmission schedule is transmitted to network elements.

11. The broadcasting method of claim 1, wherein the sequence number information is used for a ciphering and/or a deciphering.

12. The broadcasting method of claim 11, wherein service data units received from a distribution entity are segmented only across packet data units with subsequent sequence numbers.

13. The broadcasting method of claim 11, wherein a mobile unit concatenated a first segment in a packet data unit with a sequence number 'x' with a last segment in the packet data unit with a sequence number 'x-1'.

14. The broadcasting method of claim 1, wherein identical sequence number information is used for same Multimedia Broadcast Multicast Service (MBMS) data from different network elements.

15. A method of broadcasting in a telecommunications network in a segmentation/re-assembly mode, comprising segmenting and/or re-assembling based on ordering information from a transmission schedule.

16. The broadcasting method of claim 15, wherein the transmission schedule is a packet data unit transmission scheme.

17. The broadcasting method of claim 15, wherein the transmission schedule is transmitted to a plurality of network elements and at least one mobile unit.

18. The broadcasting method of claim 15, wherein a single frequency network mode of operation is used for broadcasting.

19. The broadcasting method of claim 16, wherein the transmission schedule enables a determination of sequence number information for each packet data unit.

20. The broadcasting method of claim 16, wherein a specific occasion is specified by a time or a radio frame number at which at least one packet data unit is transmitted.

21. The broadcasting method of claim 15, wherein no sequence number information is transmitted over a radio link.

22. The broadcasting method of claim 17, wherein the network elements and the mobile terminal are informed of the transmission schedule before the beginning of a transmission and/or a reception of a data packet.

**23.** The broadcasting method of claim 15, wherein a ciphering and/or a deciphering are performed based on the ordering information from a transmission schedule.

Fig. 1

BM-SC

CE

DE

(2)

(1)

eNB

eNB

eNB

eNB

UE

Fig. 2

UE_1 ··· UE_y eNB_1 ··· eNB_x M-CE M-DE

1. SFN TX CONFIGURATION
- Applicable services/bearers
- SFN area/participating eNBs
- Transmission Schedule
    -Occasions (time/radio frame)
    -Average Bit capacity per occasion
    -Start Time

2. SFN TX CONFIGURATION
- Applicable services/bearers
- SFN area/applicable cells
- Transmission Schedule
    -Occasions (time/radio frame)
    -Start Time;
    -Start RLC SN
    -Radio configuration
     (RLC,MAC,Phy) per occasion
    - RLC PDU repetition schedule

3. SFN TX CONFIGURATION
- Applicable services/bearers
- Radio configuration (RLC,MAC,Phy)

4. RLC PDU's with SN

Fig. 3

17

| UE_1 | ··· | UE_y | | eNB_1 | ··· | eNB_x | | M-CE | | M-DE |

**1. SFN TX CONFIGURATION**
-Applicable services/bearers
-SFN area/participating eNBs
-Transmission Schedule
    -Occasions (time/radio frame)
    -Average Bit capacity per occasion
    -Start Time

**2. SFN TX CONFIGURATION**
-Applicable services/bearers
-SFN area/applicable cells
- Transmission Schedule
    -Occasions (time/radio frame)
    -Start Time;
    -Start RLC SN
    -Radio configuration
     (RLC,MAC,Phy) per occasion
    -RLC PDU repetition schedule

**3. SFN TX CONFIGURATION**
- Applicable services/bearers
- Transmission Schedule
    -Occasions (time/radio frame)
    -Start Time
    -Start RLC SN
    -Radio configuration
     (RLC,MAC,Phy) per occasion
    -RLC PDU repetition schedule

**4. RLC PDU's without SN**

Fig. 4

18

| UE_1 | ··· | UE_y | eNB_1 | ··· | eNB_x | M-CE | M-DE |
|---|---|---|---|---|---|---|---|

1. SFN TX CONFIGURATION
-Applicable services/bearers
-SFN area/participating eNBs
-Transmission Schedule
    -Occasions (time/radio frame)
    -AverageBit capacity per occasion
    -Start Time

2. SFN TX CONFIGURATION
-Applicable services/bearers
-SFN area/applicable cells
- Transmission Schedule
    -Occasions (time/radio frame)
    -Radio configuration
    (RLC,MAC,Phy) per occasion
-RLC PDU repetition schedule

3. SFN TX CONFIGURATION
- Applicable services/bearers
- Transmission Schedule
    -Occasions (time/radio frame)
    -Radio configuration
    (RLC,MAC,Phy) per occasion
    -RLC PDU repetition schedule

4. RLC PDU's without SN

Fig. 5

510

| Transceiver | |
|---|---|
| 511 | Packet Data Convergence Protocol |
| 512 | Radio Link Control |
| 513 | Medium Acces Control |
| 514 | Physical layer |

500

| Controller | |
|---|---|
| 501 | Radio resource management control |
| 502 | Transceiver controller |

Memory — 520

Fig.6

700

| RLC transmitter | |
|---|---|
| 710 | Transmission buffer |
| 720 | SDU segmentation and concatenation |
| 730 | RLC header addition |
| 740 | Ciphering |

Fig. 7

**Fig. 8**

**Fig. 9**

UE/UTRAN

Radio Interface (Uu)

UTRAN/UE

UM-SAP

UM-SAP

Transmitting
UM RLC
entity

Receiving
UM RLC
entity

Transmission
buffer

Reassembly

Segmentation &
Concatenation

Remove RLC
header

Add RLC header

Reception
buffer

Ciphering

Deciphering

DCCH/DTCH – UE
CCCH/SHCCH/DCCH/DTCH/CTCH/
MCCH/MSCH/MTCH – UTRAN

DCCH/DTCH – UTRAN
CCCH/SHCCH/DCCH/DTCH/CTCH/
MCCH/MSCH/MTCH – UE

Fig. 10

UTRAN        Radio Interface (Uu)        UE

UM-SAP                 UM-SAP

| Transmission buffer | Transmitting UM RLC entity |
| Segmentation & Concatenation | Receiving UM RLC entity |
| Add RLC header | |

Reassembly

Remove RLC header

Reception buffer

Duplicate avoidance and reordering

MTCH - UTRAN        MTCH - UE

Fig. 11

| Sequence Number | E | Oct1 |
| Length Indicator | E | (Optional) (1) |

.
.
.

| Length Indicator | E | (Optional) |
| Data | | |
| PAD | | (Optional) |

Last Octet

Fig. 12

**European Patent Office**

**EUROPEAN SEARCH REPORT**

Application Number

EP 08 00 0673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 840 482 A (THALES SA [FR]) 5 December 2003 (2003-12-05) * claim 1 * | 1,15 | INV. H04Q7/38 ADD. H04L12/56 |
| X | US 2003/210676 A1 (WU CHIH-HSIANG [TW]) 13 November 2003 (2003-11-13) * paragraph [0006] - paragraph [0009] * | 1,15 | |
| X | US 2005/213605 A1 (KIM SOENG-HUN [KR] ET AL) 29 September 2005 (2005-09-29) * paragraph [0010] - paragraph [0012] * | 1,15 | |

TECHNICAL FIELDS SEARCHED (IPC)

H04Q

The present search report has been drawn up for all claims

| Place of search | Date of completion of the search | Examiner |
|---|---|---|
| Berlin | 24 July 2008 | Bernedo Azpiri, P |

EPO FORM 1503 03.82 (P04C01)

## ANNEX TO THE EUROPEAN SEARCH REPORT
## ON EUROPEAN PATENT APPLICATION NO.

EP 08 00 0673

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2008

| Patent document cited in search report | | Publication date | Patent family member(s) | | Publication date |
|---|---|---|---|---|---|
| FR 2840482 | A | 05-12-2003 | CA DE DE EP US | 2429855 A1 60300354 D1 60300354 T2 1376986 A1 2004015717 A1 | 28-11-2003 07-04-2005 29-12-2005 02-01-2004 22-01-2004 |
| US 2003210676 | A1 | 13-11-2003 | NONE | | |
| US 2005213605 | A1 | 29-09-2005 | KR | 20050095419 A | 29-09-2005 |